# FASCICULE DE BREVET EUROPEEN

(11) **EP 2 047 241 B1**
(45) Date de publication et mention de la délivrance du brevet: **16.04.2014**
(21) Numéro de dépôt: 07788050.8
(22) Date de dépôt: 30.07.2007
(51) Int. Cl.: G01N 27/90

(54) **PROCEDE ET DISPOSITIF DE CONTROLE PAR COURANTS DE FOUCAULT A FONCTIONS EMISSION/RECEPTION SEPAREES D'UNE PIECE ELECTRIQUEMENT CONDUCTRICE**
VERFAHREN UND VORRICHTUNG ZUR ÜBERPRÜFUNG EINES ELEKTRISCH LEITENDEN TEILS UNTER VERWENDUNG VON WIRBELSTRÖMEN MIT GETRENNTEN ABGABE-/AUFNAHMEFUNKTIONEN
METHOD AND DEVICE FOR CHECKING USING EDDY CURRENTS WITH SEPARATE EMISSION/RECEPTION FUNCTIONS AN ELECTRICALLY CONDUCTING PART

(30) Priorité: 03.08.2006 FR 0653277
(43) Date de publication de la demande: 15.04.2009
(73) Titulaire: Commissariat à l'Énergie Atomique et aux Énergies Alternatives, 75015 Paris (FR)
(72) Inventeur: DECITRE, Jean-Marc, F-91460 Marcoussis (FR)
(74) Mandataire: Ilgart, Jean-Christophe
(86) Numéro de dépôt international: PCT/EP2007/057851
(87) Numéro de publication internationale: WO 2008/015197

(56) Documents cités:
- EP-A- 0 177 626
- EP-A1- 0 061 956
- FR-A- 2 881 826
- FR-A1- 2 260 113
- FR-A1- 2 773 397
- US-A1- 5 659 248
- US-B1- 6 310 476

## Description

### DOMAINE TECHNIQUE

L'invention concerne un procédé et un dispositif de contrôle par courants de Foucault à fonctions émission/réception séparées d'une pièce électriquement conductrice.

### ÉTAT DE LA TECHNIQUE ANTÉRIEURE

Le domaine de l'invention est celui du contrôle par courants de Foucault à fonctions émission/réception séparées d'une pièce électriquement conductrice, présentant une grande dynamique de fonctionnement et utilisant un ensemble de bobinages d'émission et de réception très compact. Un tel contrôle est particulièrement avantageux pour la détection de défauts de petite taille, notamment pour le contrôle non destructif (CND) de pièces électriquement conductrices.

Le principe de la détection de défauts par courants de Foucault dans une pièce électriquement conductrice consiste à émettre au voisinage de cette pièce, à l'aide d'au moins un bobinage d'émission, un champ électromagnétique de fréquence adaptée à la conductivité du matériau et à la profondeur des défauts recherchés. On mesure alors, aux bornes d'au moins un bobinage de réception, une force électromotrice due au couplage direct des lignes de champ magnétique entre le bobinage d'émission et le bobinage de réception en présence de la pièce conductrice. On mesure également une petite variation de cette force électromotrice qui se superpose à celle-ci lors de la présence d'un défaut dans le matériau. Le domaine de l'invention se limite ainsi aux procédés et dispositifs utilisant au moins un bobinage affecté à l'émission du signal électromagnétique apte à générer des courants de Foucault dans la pièce à contrôler, et au moins un bobinage affecté à la réception des signaux induits par les courants de Foucault, une telle configuration étant dite « à fonctions séparées ».

La force électromotrice induite V_{R} aux bornes de chaque bobinage de réception, qui est à la même fréquence que le courant envoyé dans le bobinage d'émission associé, permet d'obtenir le signal utile après une démodulation. En présence d'un défaut, cette force électromotrice induite V_{R} devient V_{R} ± δV_{R}, seule la variation δV_{R}, très faible devant V_{R}, étant porteuse d'information.

La détection de défauts, notamment de faibles dimensions, induit une faible dimension des bobinages (petits éléments), et donc des signaux détectés de très faible amplitude. Pour résoudre un tel problème, les dispositifs de l'art antérieur proposent des associations de plusieurs bobinages.

Ainsi, le document référencé [1] en fin de description décrit un dispositif de détection de défauts par courants de Foucault comprenant au moins une sonde de détection formées d'un bobinage d'émission et de quatre bobinages de détection du champ magnétique induit dans la pièce à contrôler. Les bobinages de réception sont disposées de sorte que leurs centres forment les sommets d'un losange en formant une première et une seconde paires de bobinages, la première paire disposée sur une diagonale de ce losange étant connectée en mode commun, la seconde paire disposée sur l'autre diagonale étant connectée en mode commun, ces première et seconde paires de bobinages de réception étant connectées en mode différentiel. Le bobinage d'émission, alimenté par un courant alternatif, est disposé au dessus de ces bobinages de réception, le centre de celui-ci étant disposé au dessus du centre du losange. Le dispositif comprend également un dispositif permettant de commuter le fonctionnement de chacune de ces sondes. Ainsi, pour chaque sonde, ce dispositif comporte plusieurs bobinages de réception, disposés de manière symétrique par rapport à un bobinage d'émission et connectés de manière différentielle.

Ce dispositif de détection de défauts présente de nombreux inconvénients, à savoir notamment sa lourdeur, son coût, et aussi les défauts inhérents aux montages différentiels : les signaux indésirables ne sont éliminés que s'ils apparaissent au même instant sur deux bobinages connectés en opposition, avec la même amplitude et la même phase. De plus les bobinages associés, et leurs voies de mesures respectives, doivent présenter des caractéristiques identiques.

De plus, dans ce document référencé [1], lorsque le dispositif de détection de défauts se déplace au dessus de la pièce à contrôler, les variations d'entrefer, c'est-à-dire les variations de hauteur entre ce dispositif et cette pièce, sont susceptibles de perturber le signal utile. Ces variations d'entrefer sont principalement dues :
- à des vibrations lors du déplacement du dispositif, et
- au fait que le dispositif ne peut pas épouser précisément la surface locale d'une pièce complexe.

L'invention a pour objet de pallier de tels inconvénients en proposant un procédé et un dispositif de contrôle par courants de Foucault à fonctions émission/réception séparées d'une pièce électriquement conductrice, peu sensibles au bruit d'entrefer en minimisant la variation du signal utile due à une variation d'entrefer accidentelle.

### EXPOSÉ DE L'INVENTION

L'invention concerne un procédé de contrôle par courants de Foucault à fonction émission/réception séparées d'une pièce électriquement conductrice de conductivité électrique σ₁ et de perméabilité magnétique relative µᵣ₁, dans lequel un capteur, comprenant au moins un ensemble formé d'au moins un bobinage d'émission d'un champ électromagnétique et d'au moins un bobinage de réception influencé par les champs électromagnétiques produits par l'intermédiaire de courants de Foucault induits dans cette pièce, se déplace au dessus de cette pièce, caractérisé par les étapes définies dans la revendication 1.

Avantageusement les bobinages d'émission et de réception sont disposés de part et d'autre d'un support, qui peut être flexible, par exemple un film kapton, dans lequel les bobinages sont gravés. Avantageusement la gamme de fréquences utilisées est comprise entre quelques hertz, par exemple 10, et 50 MHz.

Avantageusement un matériau magnétique est disposé au centre de chaque bobinage et/ou au voisinage de chaque bobinage, du côté opposé à celui de la pièce à contrôler, de manière à diminuer la réluctance du circuit magnétique de chaque couple bobinage d'émission/bobinage de réception.

Le procédé de l'invention présente notamment les avantages suivants :
- L'optimisation de la distance entre le bobinage d'émission et le bobinage de réception du capteur permet de minimiser l'influence du bruit d'entrefer sur le signal utile.
- Un même capteur peut s'adapter à différentes pièces à contrôler avec plusieurs rayons de courbure, en permettant de balayer (« scan ») des surfaces à trois dimensions avec une résolution spatiale fine.
- En cas d'amincissement de la surface d'usure du support, par exemple un film kapton, lors du balayage répété du capteur sur la pièce à contrôler, les réglages de l'appareil intégrant le capteur (notamment l'équilibrage) restent identiques.
- Un capteur sur film kapton permet une gravure simultanée des bobinages d'émission et de réception, de leurs fils d'alimentation, et de leurs connecteurs, ce qui réduit les coûts de réalisation et d'entretien du fait d'une absence de soudures.
- Le capteur ainsi obtenu présente une bonne sensibilité, un bon rapport signal à bruit, et permet une grande densité des bobinages du fait du recouvrement des bobinages d'émission et de réception.

Le procédé de l'invention est utilisable dans de nombreux domaines, notamment :
- dans le domaine nucléaire, pour les zones de transition de dudgeonnage (ZTD) dans les tubes de générateurs de vapeur,
- dans le domaine aéronautique dans le cas de pièces complexes.

L'invention concerne également un dispositif de contrôle par courants de Foucault à fonctions émission/réception séparées d'une pièce électriquement conductrice, caractérisé en ce qu'il comprend les caractéristiques définies dans la revendication 9.

Avantageusement un isolant électrique est disposé entre deux lignes consécutives.

### BRÈVE DESCRIPTION DES DESSINS

La figure 1 illustre un schéma de principe d'un capteur mettant en oeuvre le procédé de l'invention.
La figure 2 illustre la tension de couplage complexe obtenue aux bornes d'un bobinage de réception d'un capteur en fonction de la distance d entre le bobinage d'émission correspondant et ce bobinage de réception.
La figure 3 illustre les écarts de tension de couplage entre les courbes de la figure 2.
La figure 4 illustre un exemple de réalisation d'un capteur optimisé obtenu en utilisant le procédé de l'invention.
Les figures 5A et 5B illustrent une configuration multi-éléments du dispositif de l'invention.

### EXPOSÉ DÉTAILLÉ DE MODES DE RÉALISATION PARTICULIERS

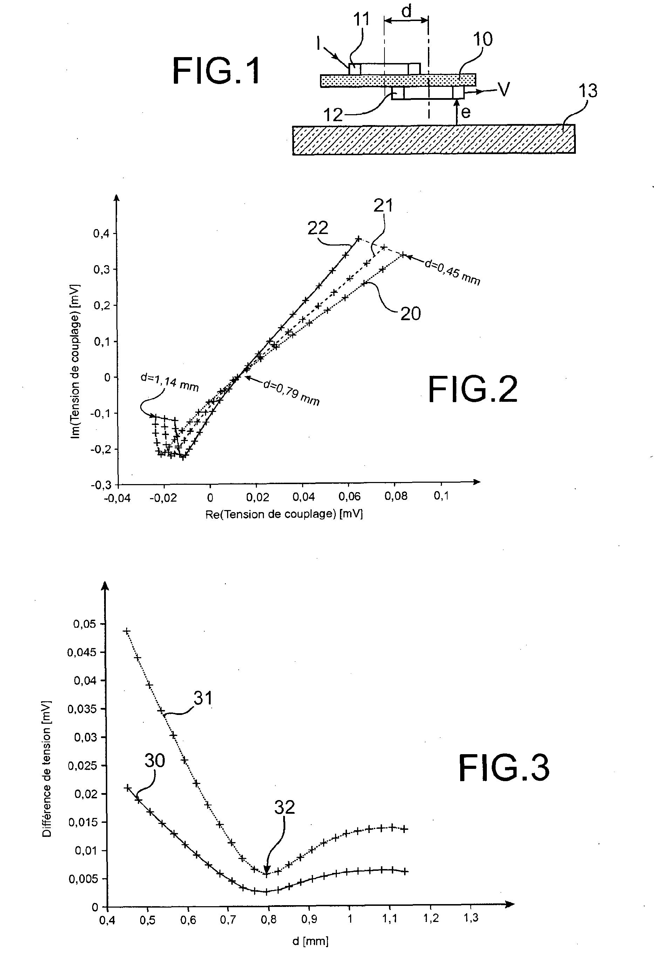

Le capteur illustré sur la figure 1, comprend un bobinage d'émission 11 (rayon r1) et un bobinage de réception 12 (rayon r2) disposés de part et d'autre d'un support 10. Ces bobinages 11 et 12 peuvent, par exemple, être gravés de part et d'autre d'un support flexible 10 en kapton. Le bobinage 11, qui est arbitrairement choisi comme bobinage d'émission, est alimenté par un courant I. Le bobinage 12 est alors le bobinage de réception, aux bornes duquel on mesure une tension V.

Ces deux bobinages 11 et 12 peuvent avoir avantageusement les mêmes caractéristiques géométriques. Leurs centres sont séparés d'une distance d. L'ensemble de ces bobinages 11 et 12 sur le support 10 est situé à une distance e, appelée entrefer, d'une pièce conductrice 13 à contrôler.

En l'absence de défaut dans la pièce 13, la tension V, mesurée aux bornes du bobinage de réception 12, est due au couplage électromagnétique entre les deux bobinages 11 et 12 : une partie du champ magnétique alternatif émis par le bobinage d'émission 11 traversant le bobinage réception 12. Ce champ magnétique induit une tension de même fréquence que l'on nomme tension de couplage ou mutuelle induction.

La figure 2 illustre la tension de couplage complexe obtenue aux bornes du bobinage de réception 12 en fonction de la distance d (en mm) entre les deux bobinages 11 et 12 pour trois valeurs d'entrefer :
- e = 100 µm : courbe 20,
- e = 120 µm : courbe 21, et
- e = 150 µm : courbe 22.

Les autres paramètres sont les suivants :
- diamètre extérieur des bobinages 11 et 12 : 1mm,
- diamètre intérieur des bobinages 11 et 12 : 0,5 mm,
- chaque bobinage 11 et 12 étant formé de six spires avec un pas de 45 µm, de 5 µm de hauteur,
- support 10 flexible d'épaisseur 50 µm,
- fréquence de travail : 10 MHz.

Le procédé de l'invention comporte les étapes suivantes :
- obtention d'une première courbe 20 de tension complexe aux bornes d'un bobinage de réception 12, en fonction de la distance entre le bobinage d'émission 11 correspondant et ce bobinage de réception, pour la distance nominale, qui est la distance moyenne entre la pièce et la partie la plus proche des bobinages lorsque le capteur est plaqué sur la pièce (valeur d'entrefer minimale), entre le capteur et une partie sans défaut de cette pièce ou une autre pièce sans défaut dont, par exemple, la conductivité électrique σ₂ est telle que 0,05 x σ₁ ≤ σ₂ ≤ 20 x σ₁ et la perméabilité magnétique relative µᵣ₂ est telle 0,05 x µᵣ₁ ≤ µᵣ₂ ≤ 20 x µᵣ₁,
- obtention d'au moins une seconde courbe de tension complexe 21, 22 aux bornes d'un bobinage de réception, en fonction de la distance entre le bobinage d'émission correspondant et ce bobinage de réception, pour au moins une distance e différente de la distance nominale entre le capteur et une partie sans défaut de cette pièce ou une autre pièce sans défaut,

- détermination d'au moins une distance donnée di qui minimise le module de l'écart entre la première courbe 20 et la au moins une seconde courbe 21, 22,
- calcul de la moyenne arithmétique d de la au moins une distance donnée di, cette moyenne arithmétique d étant égale à la valeur de di quand il n'y a qu'une distance di,
- choix de cette moyenne arithmétique +/20% comme distance entre les deux bobinages d'émission et de réception
- détection de la présence éventuelle d'un ou plusieurs défauts dans cette pièce.

Les écarts de tension de couplage entre les courbes 21 et 22 et la courbe de référence 20 sont représentés sur les courbes 30 et 31 de la figure 3.

On constate que ces courbes 30 et 31 passent par un minimum pour des abscisses 32 de d1 = 790 µm et de d2 = 788 µm pour les deux sauts d'entrefer de 20 µm et 50 µm. Ces distances d1 et d2 minimisent donc l'influence d'une variation de l'entrefer. Le procédé de l'invention propose donc de disposer les bobinages 11 et 12 à une telle distance d = (d1 + d2)/2 ± 20%.

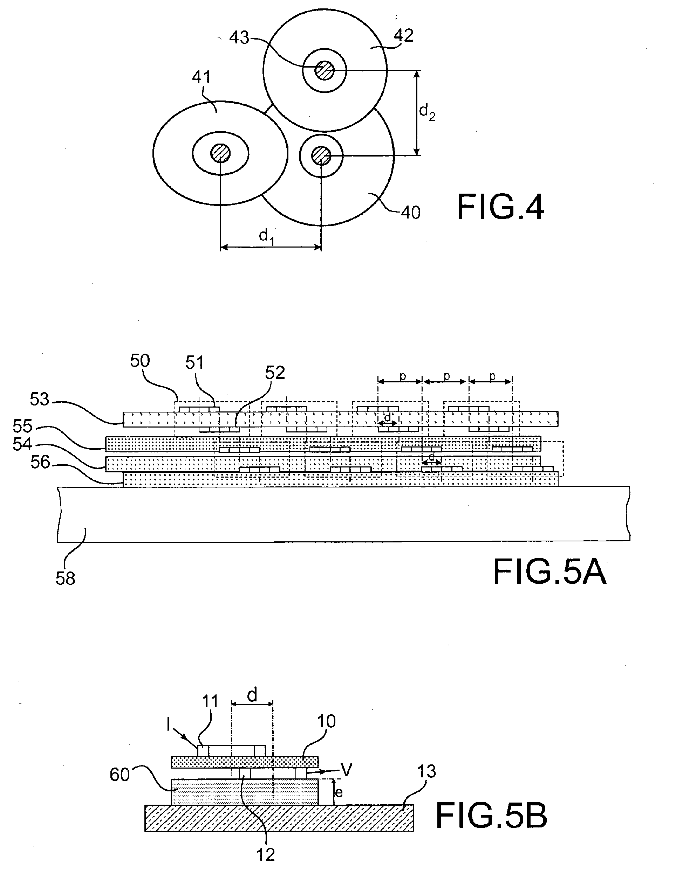

Un exemple de réalisation d'un capteur ainsi optimisé, qui est donc moins bruyant notamment sur des surfaces complexes, est illustré selon la figure 4. Dans cet exemple, il y a un recouvrement entre le bobinage d'émission 40 et chaque bobinage de réception 41 et 42. Chaque distance optimisée d1 (entre les bobinages 40 et 41) et d2 (entre les bobinages 40 et 42) est supérieure au plus petit des rayons des bobinages 40, 41 ou 42 et inférieure à la somme des rayons des deux bobinages d'émission et de réception correspondants. Dans cet exemple chaque bobinage comporte un trou métallisé 43 en son centre. Mais, les bobinages d'émission et/ou de réception peuvent n'avoir qu'une seule spire. Dans ce cas les trous métallisés 43 ne sont pas nécessaires.

La distance d optimale entre le bobinage d'émission et un bobinage de réception 41 ou 42 peut être trouvée expérimentalement :
- en gravant le bobinage d'émission 40 et un bobinage de réception 41 ou 42 sur deux supports distincts et en mesurant la tension de couplage pour différentes valeurs d et e, ou
- en testant une série d'éléments, chacun avec un bobinage d'émission 40 et un ou plusieurs bobinage(s) de réception 41, 42, avec des distances d variables entre les bobinages d'émission et de réception.

Le procédé de l'invention est avantageusement mis en oeuvre dans une gamme de fréquences habituellement utilisée dans le domaine du contrôle non destructif par courants de Foucault, c'est-à-dire de quelques Hertz, par exemple 10, à 50 MHz.

Dans des variantes de réalisation du procédé de l'invention, on peut utiliser un capteur comprenant :
- des bobinages d'émission et de réception n'ayant pas les mêmes caractéristiques géométriques,
- plusieurs bobinages de réception non identiques, placés à des distances d d'un bobinage d'émission, optimisées par le procédé de l'invention,
- des bobinages d'émission et de réception de forme complexe: par exemple polygonale, ovale, spire(s) quelconque(s),
- des bobinages d'émission ou de réception d'un élément composés de plusieurs bobinages connectés en série. Par exemple, un bobinage peut être composé de deux bobinages coaxiaux et gravés en vis-à-vis sur chacune des faces d'un film kapton et connectés en série par l'intermédiaire du trou métallisé et dont les sens d'enroulement sont tels que les tensions à leurs bornes s'ajoutent,
- des bobinages d'émission ou de réception composés de deux bobinages (ou plus) non coaxiaux connectés en différentiel et distants du bobinage d'émission correspondant d'une distance voisine.
- un matériau magnétique disposé au centre de chaque bobinages et/ou au voisinage de chaque bobinage (du côté opposé à celui de la pièce à contrôler) de manière à diminuer la réluctance du circuit magnétique de chaque couple bobinage d'émission/bobinage de réception,
- des bobinages multicouches, par exemple plusieurs films kaptons empilés et disposés en série.
- des composants électroniques, par exemple des amplificateurs, multiplexeurs, démodulateurs..., disposés sur le support,
- une configuration multi-éléments.

Une configuration multi-éléments comprend plusieurs éléments disposés sur un même substrat, par exemple une barrette associée à un déplacement mécanique sur un axe ou une disposition en matrice permettant d'éviter tout déplacement mécanique. Une telle configuration permet de limiter le temps d'inspection de la surface des pièces. Or, la taille d'un élément composé d'au moins deux bobinages, notamment prévu pour la détection de petits défauts, est souvent plus importante que le pas p maximum requis entre deux éléments, le pas p étant déterminé de telle sorte que, quelle que soit la position d'un défaut dans une pièce, au moins un élément puisse détecter sa présence.

Une première solution permettant d'augmenter la densité des éléments pour atteindre le pas p consiste à disposer les éléments en plusieurs lignes, en quinconce, tous à la même hauteur, sur le même support. Ainsi, si l'élément est deux fois plus large que le pas p souhaité, on utilise deux lignes d'éléments, les éléments sur une même ligne étant espacés de 2p. Une telle configuration pose des problèmes pour exploiter les données dans la mesure où il n'y a pas de cohérence spatiale des différentes lignes, ce qui oblige à utiliser une étape de post-traitement avant d'analyser les cartographies (translation des lignes).

Une deuxième solution, illustrée sur la figure 5A consiste à empiler des lignes d'éléments 50 comportant un bobinage d'émission 51 et un bobinage de réception 52, toujours en quinconce, en plaçant l'un au-dessus de l'autre au moins deux substrats 53 et 54 (par exemple des films en kapton souples) avec des isolants intermédiaires 55 et 56, chaque ligne étant décalée de la suivante du pas p. En utilisant des éléments « classiques » i.e. dont la distance d entre le bobinage d'émission 51 et le bobinage de réception 52 n'est pas optimisée, la force électromotrice induite V_{R} aux bornes des bobinages de réception diffère suivant la couche d'appartenance de l'élément. Ceci rend délicat, l'étape d'équilibrage de l'appareil à courants de Foucault, notamment dans le cas d'éléments multiplexés.

Sur la figure 5B, qui illustre plus particulièrement un élément, on utilise les mêmes références que sur la figure 1, en ajoutant un isolant 60.

L'optimisation de la distance entre le bobinage d'émission et le bobinage de réception selon l'invention, permet d'obtenir des éléments dont la force électromotrice induite V_{R} a la même valeur, quelle que soit la distance entre la pièce 58 et l'élément. Cette configuration est donc particulièrement adaptée au procédé d'optimisation de la distance de l'invention.

### REFERENCES

[1] US 6 310 476

## Revendications

1. Procédé de contrôle par courants de Foucault à fonction émission/réception séparées d'une pièce électriquement conductrice (13) de conductivité électrique σ₁ et de perméabilité magnétique relative µᵣ₁, dans lequel un capteur, comprenant au moins un ensemble formé d'au moins un bobinage d'émission (11) d'un champ électromagnétique et d'au moins un bobinage de réception (12) influencé par les champs électromagnétiques produits par l'intermédiaire de courants de Foucault induits dans cette pièce (13), se déplace au dessus de cette pièce, **caractérisé en ce qu'**il comporte les étapes suivantes :
- obtention d'une première courbe (20) de tension complexe aux bornes d'un bobinage de réception (12), en fonction de la distance entre le bobinage d'émission (11) correspondant et ce bobinage de réception, pour la distance nominale entre le capteur et une partie sans défaut de cette pièce ou une autre pièce sans défaut,
- obtention d'au moins une seconde courbe de tension complexe (21,22) aux bornes d'un bobinage de réception, en fonction de la distance entre le bobinage d'émission correspondant et ce bobinage de réception, pour au moins une distance (e) différente de la distance nominale entre le capteur et une partie sans défaut de cette pièce ou une autre pièce sans défaut,
- détermination d'au moins une distance donnée di qui minimise le module de l'écart entre la première courbe (20) et la au moins une seconde courbe (21, 22),
- choix de la distance di+/-20% comme distance entre les axes des deux bobinages d'émission et de réception quand il n'y a qu'une distance di et choix de la moyenne arithmétique d+/-20% de la distance di quand il y a au moins deux distances di entre les deux bobinages d'émission et de réception,
- détection de la présence éventuelle d'un ou plusieurs défauts dans cette pièce.

2. Procédé selon la revendication 1, dans lequel, dans la partie sans défaut de la pièce ou dans une autre pièce sans défaut, la conductivité électrique σ₂ est telle que 0,05 x σ₁ ≤ σ₂ ≤ 20 x σ₁ et la perméabilité magnétique relative µᵣ₂ est telle 0,05 x µᵣ₁ ≤ µᵣ₂ ≤ 20 x µᵣ₁.

3. Procédé selon la revendication 1, dans lequel l'étape d'obtention d'au moins deux courbes est réalisée par mesure ou par calcul.

4. Procédé selon la revendication 1, dans lequel les bobinages d'émission et de réception sont disposés de part et d'autre d'un support.

5. Procédé selon la revendication 4, dans lequel le support est un support flexible dans lequel les bobinages d'émission et de réception sont gravés.

6. Procédé selon la revendication 5, dans lequel le support flexible est un film kapton.

7. Procédé selon la revendication 1, dans la gamme de fréquences utilisées est comprise entre 10 Hertz et 50 Mégahertz.

8. Procédé selon la revendication 1, dans lequel un matériau magnétique est disposé au centre de chaque bobinage et/ou au voisinage de chaque bobinage, du côté opposé à celui de la pièce à contrôler, de manière à diminuer la réluctance du circuit magnétique de chaque couple bobinage d'émission/bobinage de réception.

9. Dispositif de contrôle par courants de Foucault à fonctions émission/réception séparées d'une pièce électriquement conductrice, **caractérisé en ce qu'**il comprend :
- au moins deux lignes constituées d'au moins un élément formé d'au moins un bobinage d'émission (11) d'un champ électromagnétique et d'au moins un bobinage de réception (12) disposés de part et d'autre d'un support flexible (10), dont les axes sont séparés d'une distance donnée,
**en ce que** :
- chaque ligne est décalée de la suivante d'une distance p, chaque bobinage de même nature sur une même ligne étant à une distance n x p de son voisin le plus proche, n étant le nombre de lignes,
et **en ce qu'**il comprend :
- des moyens de choix de la distance di+/-20% comme distance entres les axes des deux bobinages d'émission et de réception quand il n'y a qu'une distance di et choix de la moyenne arithmétique d+/-20% de la distance di quand il y a au moins deux distances di entre les deux bobinages d'émission et de réception, cette distance di minimisant le module de l'écart entre une courbe de tension complexe (20) pour une distance nominale entre le capteur et une partie sans défaut de cette pièce ou une autre pièce sans défaut et au moins une courbe de tension complexe (21, 22) pour au moins une distance différente de la distance nominale.

10. Dispositif selon la revendication 9, dans lequel au moins deux lignes sont à des hauteurs différentes.

11. Dispositif selon la revendication 9, dans lequel un isolant électrique est disposé entre deux lignes consécutives.

## Patentansprüche

1. Verfahren zur Überprüfung eines elektrisch leitenden Teils (13) einer elektrischen Leitfähigkeit σ₁ und einer magnetischen Permeabilitätszahl µᵣ₁ durch Wirbelströme mit getrennter Sende/Empfangsfunktion, wobei ein Sensor, der mindestens ein System umfasst, das aus mindestens einer Sendespule (11) eines elektromagnetischen Feldes und mindestens einer Empfangsspule (12), die gebildet ist durch die mittels der in diesem Teil (13) induzierten Wirbelströme erzeugten elektromagnetischen Felder beeinflusst ist, über dieses Teil verschoben wird, **dadurch gekennzeichnet, dass** das Verfahren die folgenden Schritte aufweist:
- Erhalten einer ersten Kennlinie (20) der komplexen Spannung an den Klemmen einer Empfangsspule (12) als Funktion des Abstandes zwischen der entsprechenden Sendespule (11) und dieser Empfangsspule für den nominalen Abstand zwischen dem Sensor und einem fehlerfreien Bereich dieses Teils oder einem anderen fehlerfreien Teil,
- Erhalten von mindestens einer zweiten Kennlinie der komplexen Spannung (21, 22) an den Klemmen einer Empfangsspule als Funktion des Abstands zwischen der entsprechenden Sendespule und dieser Empfangsspule für mindestens einen von dem nominalen Abstand verschiedenen Abstand (e) zwischen dem Sensor und einem fehlerfreien Bereich dieses Teils oder einem anderen fehlerfreien Teil,
- Bestimmen von mindestens einem gegebenen Abstand di, der die relative Abweichung zwischen der ersten Kennlinie (20) und der mindestens einen zweiten Kennlinie (21, 22) minimiert,
- Wählen des Abstands di +/-20 % als Abstand zwischen den Achsen der beiden Sende- und Empfangsspulen, wenn es nur einen Abstand di gibt, und Wählen des arithmetischen Mittelwerts d +/- 20 % des Abstands di, wenn es mindestens zwei Abstände di zwischen den beiden Sende- und Empfangsspulen gibt,
- Erfassen des möglichen Vorhandenseins von einem oder mehreren Fehlern in diesem Teil.

2. Verfahren nach Anspruch 1, wobei in dem fehlerfreien Bereich des Teils oder in einem anderen fehlerfreien Teil die elektrische Leitfähigkeit σ₂ das Folgende erfüllt:
0,05 x σ₁ ≤ σ₂ ≤ 20 x σ₁
und die magnetische Permeabilitätszahl µᵣ₂ das Folgende erfüllt:
0,05 x µᵣ₁ ≤ µᵣ₂ ≤ 20 x µᵣ₁.

3. Verfahren nach Anspruch 1, wobei der Schritt des Erhaltens von mindestens zwei Kennlinien mittels einer Messung oder einer Berechnung durchgeführt wird.

4. Verfahren nach Anspruch 1, wobei die Sende- und Empfangsspulen auf der einen bzw. der anderen Seite eines Trägers angeordnet sind.

5. Verfahren nach Anspruch 4, wobei der Träger ein flexibler Träger ist, in den die Sende- und Empfangsspulen eingraviert sind.

6. Verfahren nach Anspruch 5, wobei der flexible Träger ein Kaptonfilm ist.

7. Verfahren nach Anspruch 1, wobei der Bereich der verwendeten Frequenzen zwischen 10 Hertz und 50 Megahertz liegt.

8. Verfahren nach Anspruch 1, wobei ein magnetisches Material im Zentrum jeder Spule und/oder in der Nähe jeder Spule, auf der zu dem zu überprüfenden Teil entgegengesetzten Seite, derart angeordnet wird, dass der magnetische Widerstand des magnetischen Kreises von jedem Emissionsspule/Empfangsspule-Paar verringert wird.

9. Vorrichtung zur Überprüfung eines elektrisch leitenden Teils durch Wirbelströme mit getrennten Sende/Empfangsfunktionen, **dadurch gekennzeichnet, dass** sie umfasst:
- mindestens zwei Linien, die von mindestens einem Element gebildet werden, das aus mindestens einer Sendespule (11) eines elektromagnetischen Feldes und mindestens einer Empfangsspule (12), die sich auf der einen bzw. der anderen Seite eines flexiblen Trägers (10) befinden, gebildet ist, deren Achsen um einen gegebenen Abstand getrennt sind, wobei:
- jede Linie gegenüber der Folgenden um einen Abstand p verschoben ist, wobei sich jede Spule der gleichen Art auf einer gleichen Linie in einem Abstand von n x p zum nächsten Nachbarn befindet, wobei n die Zahl der Linien ist,
und wobei sie umfasst:
- Mittel zum Wählen des Abstands di +/- 20 % als Abstand zwischen den Achsen der beiden Sende- und Empfangsspulen, wenn es nur einen Abstand di gibt, und Wählen des arithmetischen Mittelwerts d +/- 20 % des Abstands di, wenn es mindestens zwei Abstände di zwischen den beiden Sende- und Empfangsspulen gibt, wobei dieser Abstand di die relative Abweichung zwischen einer Kennlinie der komplexen Spannung (20) für einen nominalen Abstand zwischen dem Sensor und einem fehlerfreien Bereich dieses Teils oder einem anderen fehlerfreien Teil und mindestens einer Kennlinie der komplexen Spannung (21, 22) für mindestens einen vom nominalen Abstand verschiedenen Abstand minimiert.

10. Vorrichtung nach Anspruch 9, wobei sich mindestens zwei Linien auf unterschiedlichen Höhen befinden.

11. Vorrichtung nach Anspruch 9, wobei ein elektrischer Isolator zwischen zwei aufeinanderfolgenden Linien angeordnet ist.

## Claims

1. Method with separate emission/reception functions for making eddy current tests on an electrically conducting part (13) with an electrical conductivity σ₁ and relative magnetic permeability µᵣ₁, in which a sensor comprising at least one assembly formed from at least one emission winding (11) emitting an electromagnetic field and at least one reception winding (12) influenced by the electromagnetic fields produced by eddy currents induced in this part (13), moves above this part, **characterised in that** it comprises the following steps:
- obtain a first complex voltage curve (20) at the terminals of a reception winding (12), depending on the distance between the corresponding emission winding (11) and this reception winding, for the nominal distance between the sensor and a portion of this part without any defects or another part without any defects,
- obtain at least one second complex voltage curve (21,22) at the terminals of a reception winding, as a function of the distance between the corresponding emission winding and this reception winding, for at least one distance (e) different from the nominal distance between the sensor and a portion of this part with no defects or another part without any defects,
- determine at least one given distance di that minimises the modulus of the difference between the first curve (20) and the at least one second curve (21, 22),
- choose the distance di+/-20% as the distance between the axes of the two emission and reception windings when there is only one distance di and to choose the arithmetic mean d+/-20% of the distance di when there are at least two distances di between the two emission and reception windings,
- detect if one or several defects are present in this part.

2. Method according to claim 1, in which the electrical conductivity σ₂ in the portion of the part with no defects or in another part without any defects, is such that 0.05 x σ₁ ≤ σ₂ ≤ 20 x σ₁ and the relative magnetic permeability µᵣ₂ is such that 0.05 x µᵣ₁ ≤ µᵣ₂ ≤ 20 x µᵣ₁.

3. Method according to claim 1, in which the step to obtain at least two curves is done by measurement or calculation.

4. Method according to claim 1, in which the emission and reception windings are arranged on each side of a support.

5. Method according to claim 4, in which the support is a flexible support in which the emission and reception windings are etched.

6. Method according to claim 5, in which the flexible support is a kapton film.

7. Method according to claim 1, in which the range of frequencies used is between 10 Hertz and 50 Megahertz.

8. Method according to claim 1, in which a magnetic material is placed at the centre of each winding and/or close to each winding, on the side opposite the part to be tested, so as to reduce the reluctance of the magnetic circuit in each emission winding / reception winding pair.

9. Device with separate emission / reception functions for making eddy current tests on an electrically conducting part, **characterised in that** it comprises:
- at least two rows composed of at least one element formed from at least one emission winding emitting an electromagnetic field and at least one reception winding (12) disposed on each side of a flexible support (10), whose axes are separated by a given distance,
and **in that**:
- each row is offset from the next row by a distance p, each winding of the same nature on a particular row being at a distance n x p from its closest neighbour, where n is the number of rows,
and **in that** it comprises:
- means to choose the distance di +/- 20% as the distance between the axes of the two emission and reception windings when there is only one distance di ant to choose the arithmetic mean d+/- 20% of the distance di when there are at least two distances di between the emission and reception windings, said distance di minimising the modulus of the difference between a complex voltage curve (20) for a nominal distance between the sensor and a portion of this part without any defects or another part without any defects, and at least one complex voltage curve (21, 22) for at least one distance different from the nominal distance.

10. Device according to claim 9, in which at least two rows are at different heights.

11. Device according to claim 9, in which an electrical insulation is arranged between two consecutive rows.
